Europäisches Patentamt

European Patent Office

Office européen des brevets

(19)

(11) Veröffentlichungsnummer: **0 251 405**
**B1**

(12)

# EUROPÄISCHE PATENTSCHRIFT

(45) Veröffentlichungstag der Patentschrift:
03.01.90

(21) Anmeldenummer: 87201201.8

(22) Anmeldetag: 23.06.87

(51) Int. Cl.⁴: **B23B 29/034**

(54) Stellelement für Schneidwerkzeuge.

(30) Priorität: 25.06.86 AT 1726/86

(43) Veröffentlichungstag der Anmeldung:
07.01.88 Patentblatt 88/1

(45) Bekanntmachung des Hinweises auf die Patenterteilung:
03.01.90 Patentblatt 90/1

(84) Benannte Vertragsstaaten:
BE DE ES FR GB IT NL SE

(56) Entgegenhaltungen:
EP-A- 0 058 646
DD-A- 67 300
DD-A- 121 587
DE-B- 2 034 601
DE-B- 2 228 553

MASCHINENMARKT, Band 79, Nr. 16, 1973,
Seiten 317-319, Würzburg; DANNEMANN et al.:
"Pneumatische Sonderwerkzeuge für die spanende
Fertigung"

(73) Patentinhaber: PLANSEE TIZIT GESELLSCHAFT M.B.H.,
A-6600 Reutte/Tirol(AT)

(72) Erfinder: Jäger, Herbert, Sallerstrasse,
D-6920 Sinsheim(DE)

(74) Vertreter: Lohnert, Wolfgang, Dr., Metallwerk Plansee
GmbH, A-6600 Reutte, Tirol(AT)

ACTORUM AG

## Beschreibung

Die Erfindung betrifft ein Stellelement zur Schneidkantenverstellung bei Schneidwerkzeugen, bestehend aus einem einstückigen Grundkörper, der durch Einarbeitung von zwei, den Grundkörper durchdringenden durch einen Schlitz verbundenen Ausnehmungen derart unterteilt ist, daß ein Werkzeugbefestigungsteil und ein Maschinenbefestigungsteil entsteht, die über zwei parallele federnde Stege am Umfang des Grundkörpers miteinander in Verbindung stehen, wobei in einer zentralen Ausnehmung des Grundkörpers ein Krafterzeugungselement angeordnet ist, das sich einerseits am Werkzeugbefestigungsteil und andererseits am Maschinenbefestigungsteil abstützt, so daß ein Ansprechen des Krafterzeugungselementes eine Verschiebung des Werkzeugbefestigungsteiles gegenüber dem Maschinenbefestigungsteil quer zu den Stegen ermöglicht.

Stellelemente dieser Art werden zwischen Schneidwerkzeug und Maschinensupport oder Maschinenspindel angeordnet. Sie dienen zur mechanischen Feinzustellung der Schneidkante in der Größenordnung von einigen Zehntelmillimetern, um den bei der Bearbeitung auftretenden Schneidkantenverschleiß, aber auch Temperaturfehler der Maschine sowie Wendeschneidplatten-Toleranzen bei laufendem Werkzeug kompensieren zu können. Auch ein Abheben der Schneidkante von der Werkstückoberfläche nach Beendigung des Zerspanungsvorganges wird ermöglicht, so daß Rückzugsriefen vermieden werden.

Ein Stellelement in Form eines Bohrkopfes ist in der DE-AS 22 28 553 beschrieben.
Das zylindrische Gehäuse des Bohrkopfes weist einen topfartigen Querschnitt auf, dessen zylindrische Wandung beiderseitig der Bohrkopfachse von jeweils zwei parallelen Tangential-Bohrungen durchsetzt ist, die durch jeweils einen parallel zur Tangential-Bohrungsachse verlaufenden Schlitz verbunden sind. Eine Tangential-Bohrung auf der einen Seite der Bohrkopfachse ist mit der schräg gegenüberliegenden Tangential-Bohrung auf der anderen Seite der Bohrkopfachse durch einen Schlitz verbunden. Auf diese Weise wird der Bohrkopf in ein Werkzeugbefestigungsteil zum Befestigen der Schneidwerkzeuge und in ein Maschinenbefestigungsteil zum Befestigen des Bohrkopfes an der Maschinenspindel unterteilt, die über zwei federnde Stege miteinander in Verbindung stehen.

Nachteilig bei dieser Ausbildung der federnden Stege ist es, daß die Belastungsverhältnisse in bezug auf die Biegebeanspruchung sehr ungünstig sind. Die größte Biegebeanspruchung bei jedem Steg tritt an den dünnen Schwachstellen an den Übergängen zum Werkzeugbefestigungsteil und Maschinenbefestigungsteil auf, die durch die zwei parallelen Tangential-Bohrungen gebildet werden. Durch die Ausbildung eines einzigen parallelen Federpaares ist die Starrheit des Werkzeugsystemes in der Ebene senkrecht zur Verstellrichtung des Stellelementes, in der die Hauptkomponente der Schneidkraft auftritt, oft nicht ausreichend, so daß es zu unerwünschten Werkzeugschwingungen und damit verbunden zu schlechten Oberflächenqualitäten des bearbeiteten Werkstückes kommen kann.

Darüberhinaus ist das Stellelement konstruktionsbedingt nur als gesamte Einheit frei von Umwucht ausgeführt. Wenn man Werkzeugbefestigungsteil und Maschinenbefestigungsteil für sich betrachtet, liegt der jeweilige Schwerpunkt nicht auf der Rotationsachse des Bohrkopfes. Da der Maschinenbefestigungsteil starr mit der Maschinenspindel verbunden ist, kann es bei hohen Drehzahlen aufgrund der Fliehkraft zu einem Verschieben des Werkzeugbefestigungsteiles gegenüber dem Maschinenbefestigungsteil und damit zu einem unbeabsichtigten Verstellen der Schneidkante kommen.

In der DE-AS 20 34 601 ist ebenfalls ein Stellelement in Form eines Bohrkopfes beschrieben, bei dem Werkzeugbefestigungsteil und Maschinenbefestigungsteil getrennt ausgeführt sind und durch zwei achs-parallel angeschraubte Blattfedern federnd miteinander verbunden sind. Die Konstruktion dieses Bohrkopfes ist jedoch im Hinblick auf die bei derartigen Stellwerkzeugen angestrebten Eigenschaften, und zwar größtmögliche Durchbiegung bei möglichst kleiner Federlänge und kleinstmöglicher Biegebeanspruchung aller Federbereiche, nicht optimal gelöst. Darüberhinaus ist auch bei diesem Werkzeug durch die Anordnung eines einzigen Federpaares die Steifigkeit in der Ebene senkrecht zur Verstellrichtung nicht optimal.

Aufgabe der vorliegenden Erfindung ist es, ein Stellelement zur Schneidkantenverstellung bei Schneidwerkzeugen der eingangs genannten Art so auszubilden, daß die größtmögliche Durchbiegung bei kleinstmöglicher Biegebeanspruchung der einzelnen Bereiche der federnden Stege erreicht wird und gleichzeitig eine ausreichende Steifigkeit des Stellkopfes in der Ebene senkrecht zur Verstellrichtung gewährleistet ist.

Erfindungsgemäß wird dies dadurch gereicht, daß die beiden federnden Stege jeweils an den Übergängen zum Werkzeugbefestigungsteil und Maschinenbefestigungsteil den größten und in der Mitte der Stege den geringsten Querschnitt aufweisen, so daß die beiden Stege in etwa die theoretisch ermittelbare Querschnittsform eines beidseitig eingespannten Trägers mit gleicher Biegebeanspruchung aufweisen und daß weiters der Werkzeugbefestigungsteil und der Maschinenbefestigungsteil zusätzlich durch zwei gegenüberliegende Federn verbunden sind, welche in einer Ebene angeordnet sind, die zur Verbindungsebene der federnden Stege um 90° versetzt ist.

Druch diese Ausgestaltung wird gegenüber den bekannten Ausführungen von Stellelementen die Biegebeanspruchung der federnden Stege bei gleicher Durchbiegung verringert bzw. bei gleicher Biegebeanspruchung eine größere Durchbiegung erreicht. Aus demselben Grund kann im Vergleich zu den bekannten Ausführungen die Länge der federnden Stege bei gleicher Durchbiegung kleiner gehalten werden und damit die Bauhöhe des Stellelementes verringert werden.

Gleichzeitig wird durch das zusätzlich angeordnete Federpaar eine erhöhte Steifigkeit des Stellelementes in Richtung der Hauptkomponente der bei der spanabhebenden Bearbeitung auftretenden Schnittkraft erreicht.

Bei einer Verwendung des erfindungsgemäßen Stellelementes für die drehende Bearbeitung, z.B. bei Bohrstangen, ist das Stellelement als zylindrischer Bohrkopf ausgeführt und wird zwischen Schneidwerkzeug und Maschinenspindel geflanscht.

In einer bevorzugten Ausführung eines erfindungsgemäßen Schneidwerkzeuges ist es als zylindrischer Bohrkopf ausgeführt und wird zwischen Schneidwerkzeug und Maschinenspindel geflanscht, wobei die federnden Stege durch Abflachung des zylindrischen Grundkörpers am Umfang und durch Einarbeiten von im Querschnitt etwa dreieckförmigen Ausnehmungen gebildet sind, die durch einen zick-zack-förmig verlaufenden Schlitz miteinander verbunden sind, wobei der Werkzeugbefestigungsteil und der Maschinenbefestigungsteil jeweils zwei Teilstücke aufweisen, die zahnartig ineinandergreifen. Der Bohrkopf wird dabei so ausgestaltet, daß der Werkzeugbefestigungsteil und der Maschinenbefestigungsteil jeweils ein erstes Teilstück aufweisen, das nahe an der Rotationsachse des Bohrkopfes liegt, während das zweite Teilstück weiter entfernt von der Rotationsachse angeordnet ist. Durch entsprechende Dimensionierung der unterschiedlich von der Rotationsachse angeordneten Teilstücke kann erreicht werden, daß Werkzeugbefestigungsteil und Maschinenbefestigungsteil jeweils für sich zumindest in Arbeitsgrundstellung frei von Unwucht sind, d.h. daß die Schwerachse des Werkzeugbefestigungsteiles und die Schwerachse des Maschinenbefestigungsteiles mit der Rotationsachse zusammenfallen. Werkzeugbefestigungsteil und Maschinenbefestigungsteil sind dann in Arbeitsgrundstellung frei von Unwucht, wenn bei beiden Teilen jeweils das Produkt aus Schwerpunkts-Abstand von der Bohrkopfachse und Masse des weiter von der Bohrkopfachse entfernten Teilstückes und das Produkt aus Schwerpunkts-Abstand von der Bohrkopfachse und Masse des näher an der Bohrkopfachse liegenden Teilstückes gleich groß ist.

Die vorstehenden Ausführungen betreffen Maßnahmen zur Erzielung eines Bohrkopfes, bei dem in Arbeitsgrundstellung Werkzeugbefestigungsteil und Maschinenbefestigungsteil für sich aufgrund ihrer Formgebung theoretisch frei von Unwucht sind. In der Praxis kann jedoch eine Unwucht auftreten, die beispielsweise durch unterschiedliche Dichte des Werkstoffes oder Bearbeitungstoleranzen entsteht. Diese ist aber sehr gering und kann beispielsweise durch einstellbare Wuchtgewichte leicht ausgeglichen werden.

Bei einer Verstellung der Schneidkante tritt zwangsläufig eine gewisse Unwucht auf. Aufgrund der geringen Verstellbarkeit der Schneidkante von wenigen Zehntel-Millimetern ist diese jedoch nicht sehr groß. Mit Hilfe der verstellbaren Wuchtgewichte kann bei Bedarf der Bohrkopf so abgestimmt werden, daß er bei einer Verstellung der Schneidkante um die halbe Maximalverstellung vollständig ausgewuchtet ist. Auf diese Weise ist es möglich, die maximal auftretende Unwucht auf den halben Wert zu beschränken.

Durch diese erfindungsgemäße Ausführung eines Bohrkopfes wird verhindert, daß bei hohen Drehzahlen durch die Fliehkraft eine ungewollte Verstellung der Schneidkante auftritt. Zu große Bohrungen und damit Ausschußteile werden auf diese Art und Weise vermieden.

In einer besonders vorteilhaften Ausgestaltung des erfindungsgemäßen Stellelementes sind die zusätzlichen gegenüberliegenden Federn Blattfedern mit etwa der Form eines "beidseitig eingespannten Trägers mit gleicher Biegebeanspruchung", die jeweils möglichst nahe am Umfang des Stellelementes mit einem Ende am Werkzeugbefestigungsteil und mit dem anderen Ende am Maschinenbefestigungsteil verschraubt sind. Aus Gründen der wirtschaftlichen Herstellbarkeit ist es kaum möglich, die zusätzlichen Federn direkt am Grundkörper anzuformen. Durch ein Aufschrauben von Blattfedern wird eine wirtschaftliche Herstellung des Stellelementes gewährleistet. Zweckmäßigerweise werden diese Blattfedern möglichst nahe am Umfang des Stellelementes angebracht, daß außer der Biegebeanspruchung nur kleine Zug- und Druckbeanspruchungen wirksam werden. Die Blattfedern sind so dimensioniert, daß sie in Verstellrichtung des Stellkopfes möglichst leicht biegbar sind, während die Steifigkeit in Richtung quer zur Verstellrichtung möglichst groß sein soll.

Im folgenden wird die Erfindung anhand von Figuren näher erläutert. Es zeigen:

Figur 1 ein besonders vorteilhaftes erfindungsgemäßes Stellelement in Form eines Bohrkopfes in Seitenansicht

Figur 2 das erfindungsgemäße Stellelement nach Figur 1 im Schnitt durch die Rotationsachse

Figur 3 das erfindungsgemäße Stellelement im Schnitt A-A gemäß Figur 2

Figur 4 Prinzipdarstellung des Werkzeugbefestigungsteiles des erfindungsgemäßen Stellelementes nach Figur 1

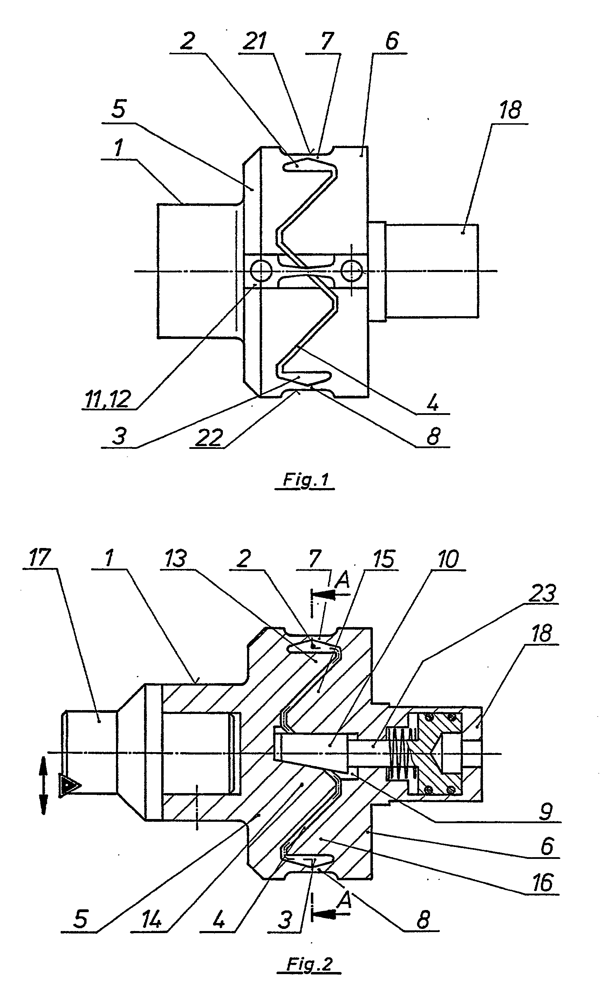

In den Figuren 1, 2 und 3 ist ein erfindungsgemäßes Stellelement als Bohrkopf -1- in einer besonders vorteilhaften Ausgestaltung dargestellt. Im zylindrischen Bohrkopf -1- sind quer zur Verstellrichtung nahe am Umfang etwa dreieckförmige, gegenüberliegende Ausnehmungen -2- und -3- eingebracht, die den Bohrkopf durchdringen. Parallel zu diesen Ausnehmungen -2- und -3- sind am Umfang Abflachungen -21- und -22- vorgesehen, so daß Stege -7- und -8- in der erfindungsgemäßen Form gebildet werden. Die rechte Ecke der Ausnehmung -7- ist über einen zahnartig verlaufenden, den Bohrkopf vollständig durchdringenden Schlitz -4- mit der linken Ecke der Ausnehmung -8- verbunden. Auf diese Weise wird der Bohrkopf -1- in ein Werkzeugbefestigungsteil -5- zur Aufnahme des in Figur 2 dargestellten Schneidwerkzeuges -17- und in ein Maschinenbefestigungsteil -6- zur Befestigung des Bohrkopfes an der Maschinenspindel unterteilt. Durch die Verbindung der Teile -5- und -6- über die federnden Stege -7- und -8- wird eine Verstellmöglichkeit des freistehenden Werkzeugbefestigungsteiles -5- gegenüber dem fest mit der Maschinenspindel verbundenen Werkzeugbefestigungsteiles -6- erreicht. Zusätzlich zu den federnden Stegen -7- und -8- in der Ebene -E⊢ durch die Rotationsachse des Bohrkopfes -1- sind in der zur Ebene -E⊢ um 90° versetzten Ebene -E⊖- durch die Rotationsachse zwei gegenüberliegende am Umfang angeordnete Federn -11- und -12- angebracht, deren Enden jeweils mit dem Werkzeugbefestigungsteil -5- und Maschinenbefestigungsteil -6- verbunden sind. Die Federn -11- und -12- sind so ausgeführt, daß sie annähernd der Querschnittsform eines beidseitig eingespannten Trägers mit gleicher Biegebeanspruchung entsprechen. Durch dieses zusätzliche Federpaar wird eine erhöhte Steifigkeit des Bohrkopfes -1- in der Ebene -E⊖- in der die Hauptschnittkraft wirkt, erreicht.

Die Stege -7- und -8- weisen aufgrund der dreieckförmigen Ausnehmungen -2- und -3- in etwa die Querschnittsform eines doppelseitig eingespannten Trägers gleicher Biegebeanspruchung auf. Der zahnartig verlaufende Schlitz -4- ist so ausgeführt, daß Werkzeugbefestigungsteil -5- und Maschinenbefestigungsteil -6- jeweils ein trapezförmiges Teilstück -14- und -15- aufweisen, das nahe an der Rotationsachse angeordnet ist sowie jeweils ein trapezförmiges Teilstück -13- und -16- aufweisen, das weiter entfernt von der Rotationsachse angeordnet ist. Durch diese spezielle Schlitzführung und genaue Dimensionierung dieser Abschnitte kann erreicht werden, daß Werkzeugbefestigungsteil -5- und Maschinenbefestigungsteil -6- jeweils für sich frei von Unwucht sind.

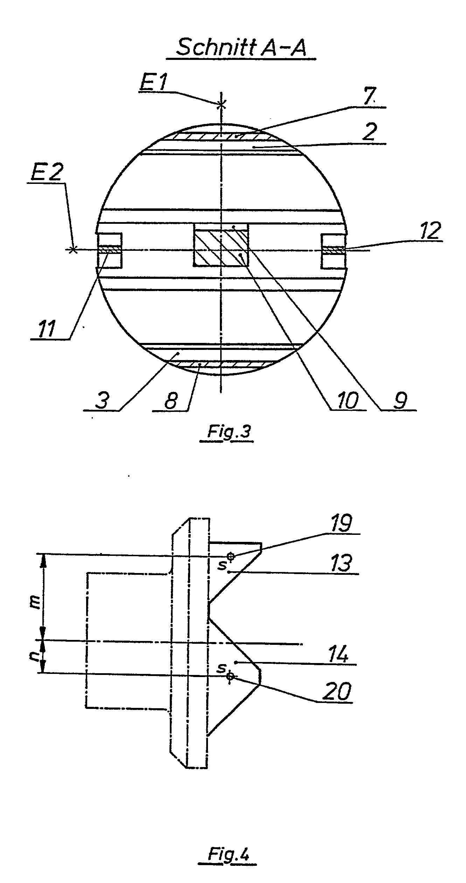

In Figur 4 ist der Werkzeugbefestigungsteil -5- in einer Prinzipskizze dargestellt, um die speziellen Dimensions-Verhältnisse näher zu erläutern. Durch die erfindungsgemäße Führung des Schlitzes -4- weist der Werkzeugbefestigunsteil zwei ungleiche, etwa trapezförmige Abschnitte -13- und -14- auf. Diese Abschnitte sind so angeordnet und dimensioniert, daß das Produkt aus Masse M und Abstand m des Schwerpunktes von der Rotationsachse des Abschnittes -13- und das Produkt aus Masse N und Abstand n des Schwerpunktes von der Rotationsachse des Abschnittes -14- gleich groß ist.

$$M \cdot m = N \cdot n$$

Wenn diese Bedingung erfüllt ist, ist das Werkzeugbefestigungsteil frei von Unwucht ausgeführt.

Die Verschiebung des Werkzeugbefestigungsteiles -5- wird mit Hilfe einer im Zentrum des Bohrkopfes -1- angeordneten Stellstange -23- mit einem keilförmigen Ende -10- bewirkt. Das keilförmige Ende -10- ist in einer Ausnehmung -9- des Bohrkopfes -1- angeordnet und stützt sich mit der horizontalen Fläche am trapezförmigen Abschnitt -15- des Maschinenbefestigungsteiles -6- ab, während die schräg verlaufende Fläche am trapezförmigen Abschnitt -14- des Werkzeugbefestigungsteiles -5- anliegt.

Bei einer Bewegung der Stellstange -23- in Richtung Schneidwerkzeug wird eine Zustellung der Schneidkante des Schneidwerkzeuges -17- bewirkt.

## Patentansprüche

1. Stellelement zur Schneidkantenverstellung bei Schneidwerkzeugen, bestehend aus einem einstückigen Grundkörper (1), der durch Einarbeitung von gegenüberliegenden, den Grundkörper durchdringenden, durch einen Schlitz (4) verbundenen Ausnehmungen (2,3) in ein Werkzeugbefestigungsteil (5) und ein Maschinenbefestigungsteil (6) unterteilt ist, die über zwei parallele federnde Stege (7,8) am Umfang des Grundkörpers (1) miteinander in Verbindung stehen, wobei in einer zentralen Ausnehmung (9) des Grundkörpes (1) ein Krafterzeugungselement (10) angeordnet ist, das sich einerseits am Werkzeugbefestigungsteil (5) und andererseits am Maschinenbefestigungsteil (6) abstützt, so daß ein Ansprechen des Krafterzeugungselementes (10) eine Verschiebung des Werkzeugbefestigungsteiles (5) gegenüber dem Maschinenbefestigungsteil (6) quer zu den Stegen (7,8) ermöglicht, **dadurch gekennzeichnet,** daß die beiden federnden Stege (7,8) jeweils an den Übergängen zum Werkzeugbefestigungsteil (5) und Maschinenbefestigungsteil (6) den größten und in der Mitte der Stege (7,8) den geringsten Querschnitt aufweisen, so daß die beiden Stege in etwa die theoretisch ermittelbare Querschnittsform eines beidseitig eingespannten Trägers mit gleicher Biegebeanspruchung aufweisen, und daß weiters der Werkzeugbefestigungsteil (5) und der Maschinenbefestigungsteil (6) zusätzlich durch zwei gegenüberliegende Federn (11,12) verbunden sind, welche in einer Ebene (E⊖) angeordnet sind, die zur Verbindungsebene (E⊢) der federnden Stege (7,8) um 90° versetzt ist.

2. Stellelement zur Schneidkantenverstellung bei Schneidwerkzeugen nach Anspruch 1, dadurch gekennzeichnet, daß es als zylindrischer Bohrkopf ausgeführt ist und zwischen Schneidwerkzeug und Maschinenspindel geflanscht wird, wobei die federnden Stege (7,8) durch Abflachung des zylindrischen Grundkörpers (1) am Umfang und durch Einarbeiten von im Querschnitt etwa dreieck-förmigen Ausnehmungen (2,3) gebildet sind, die durch einen zick-zack-förmig verlaufenden Schlitz (4) miteinander verbunden sind, wobei der Werkzeugbefestigungsteil (5) und der Maschinenbefestigungsteil (6) jeweils zwei Teilstücke (13,14;15,16) aufweisen, die zahnartig ineinandergreifen.

3. Stellelement zur Schneidkantenverstellung bei Schneidwerkzeugen nach einem der Ansprüche 1 bis 2, dadurch gekennzeichnet, daß die zusätzlichen gegenüberliegenden Federn (11,12) Blattfedern mit etwa der Querschnittsform eines "beidseitig eingespannten Trägers mit gleicher Biegebeanspruchung" sind, die jeweils möglichst nahe am Umfang des Stellelementes mit einem Ende am Werkzeugbefestigungsteil (5) und mit dem anderen Ende am Maschinenbefestigungsteil (6) verschraubt sind.

## Claims

1. Holder for cutting edge adjustment in cutting tools, comprising an integral base member (1) which is divided into a tool fastening part (5) and a machine fastening part (6), which are connected to one another at the periphery of the base member (1) by means of two parallel resilient bars (7, 8), by coordinating opposing recesses (2, 3) connected by means of a slit (4) and penetrating the base member, wherein a power-producing element (10), which is supported on one side by the tool fastening part (5) and on the other side by the machine fastening part (6), is arranged in a central recess (9) of the base member (1), so that response of the power-producing element (10) facilitates displacement of the tool fastening part (5) with respect to the machine fastening part (6) transversely to the bars (7, 8), characterised in that the two resilient bars (7, 8) each have the largest cross-section at the transition points to the tool fastening part (5) and machine fastening part (6), and the smallest cross-section in the centre of the bars (7, 8), so that both bars have the approximate cross-sectional shape, which can be determined theoretically, of a support clamped on both sides with the same bending stress, and in that, furthermore, the tool fastening part (5) and the machine fastening part (6) are additionally connected by means of two opposing springs (11, 12) arranged in a plane (E₂) which is offset by 90° to the connecting plane (E₁) of the resilient bars (7, 8).

2. Holder for cutting edge adjustment in cutting tools according to claim 1, characterised in that it is designed as a cylindrical cutting head, and is flanged between cutting tool and machine spindle, wherein the resilient bars (7, 8) are formed by flattening the cylindrical base member (1) at the periphery and by coordinating recesses (2, 3) having approximate triangular cross-section, which recesses (2, 3) are connected to one another by means of a slit (4) extending in zigzagged manner, wherein the tool fastening part (5) and the machine fastening part (6) each have two segments (13, 14; 15, 16) which engage like teeth.

3. Holder for cutting edge adjustment in cutting tools according to one of claims 1 to 2, characterised in that the additional opposing springs (11, 12) are leaf springs having the approximate cross-sectional shape of a "support clamped on both sides with the same bending stress", and which are screwed at one end to the tool fastening part (5) and at the other end to the machine fastening part (6) in each case as near as possible to the periphery of the holder.

**Revendications**

1. Elément de réglage pour outils de coupe, pour ajuster la position de l'arête de coupe, constitué par un corps de base en une seule pièce (1), lequel est subdivisé, par l'aménagement d'évidements opposés (2, 3) qui le traversent et sont reliés par une fente (4), de manière qu'il en résulte une partie (5) pour fixation d'outil et une partie (6) pour fixation à la machine, lesquelles sont liées l'une à l'autre par deux âmes élastiques parallèles (7, 8) situées à la périphérie du corps de base (1), le corps de base (1) comportant un évidement central (9) dans lequel est agencé un élément générateur de force (10) qui prend appui d'un côté sur la partie (5) pour fixation d'outil et de l'autre côté sur la partie (6) pour fixation à la machine, de manière qu'une réponse de cet élément générateur de force (10) permette à la partie (5) pour fixation d'outil d'être déplacée par rapport à la partie (6) pour fixation à la machine, transversalement aux âmes (7, 8), caractérisé par le fait que chacune des deux âmes élastiques (7, 8) présente sa section droite maximale aux endroits de ses transitions à la partie (5) pour fixation d'outil et à la partie (6) pour fixation à la machine, et sa section droite minimale en son milieu, de sorte que ces deux âmes présentent sensiblement une section droite ayant la forme théoriquement déterminable d'une poutre à extrémités encastrées, à sollicitation de flexion égale, et par le fait que la partie (5) pour fixation d'outil et la partie (6) pour fixation à la machine sont en outre reliées par deux ressorts en vis-à-vis (11, 12) agencés dans un plan (E2) qui est décalé de 90° par rapport au plan (E1) de liaison par les âmes élastiques (7, 8)

2. Elément de réglage pour outils de coupe, pour ajuster la position de l'arête de coupe, selon revendication 1, caractérisé par le fait qu'il est réalisé en tant que tête d'alésage cylindrique et est bridé entre outil de coupe et broche de machine, les âmes élastiques (7, 8) étant formées par aplatissement à la périphérie du corps de base cylindrique (1) et par aménagement d'évidements (2, 3) à section droite sensiblement triangulaire reliés l'un à l'autre par une fente (4) à tracé en zig-zag, la partie (5) pour fixation d'outil et la partie (6) pour fixation à la machine présentant chacune deux portions (13, 14; 15, 16) s'imbriquant à la manière de dentures.

3. Elément de réglage pour outils de coupe, pour ajuster la position de l'arête de coupe, selon l'une des revendications 1 à 2, caractérisé par le fait que les ressorts supplémentaires en vis-à-vis (11, 12) sont des ressorts à lame dont la section droite est sensiblement conforme à celle d'une "poutre à extrémités encastrées, à sollicitation de flexion égale", lesquels sont fixés par vis, en leur première extrémité à la partie (5) pour fixation d'outil et, en leur autre extrémité, à la partie (6) pour fixation à la machine, à chaque fois aussi près que possible de la périphérie de l'élément de réglage.

_Fig.1_

_Fig.2_

## Schnitt A–A

Fig.3

Fig.4